# EUROPEAN PATENT APPLICATION

(11) **EP 4 759 858 A1**
(43) Date of publication of application: **17.06.2026**
(21) Application number: 24218856.3
(22) Date of filing: 10.12.2024
(51) Int. Cl.: C08G 59/18, C08G 59/24, C08G 59/50, C09J 163/00, C08G 59/06

(54) **THERMOPLASTIC ADHESIVES COMPOSITIONS AND METHOD FOR PRODUCING SUCH THERMOPLASTIC ADHESIVE COMPOSITIONS**

(71) Applicant: The Swatch Group Research and Development Ltd, 2074 Marin (CH)
(72) Inventor: SKANDALIS, Athanasios, 8001 Zürich (CH); WEDER, Christoph, 3186 Düdingen (CH); AYER, Mathieu, 1740 Neyruz (CH)
(74) Representative: ICB SA

(57) **Abstract**

The present invention relates to a thermoplastic adhesive composition comprising a linear oligomer and/or a linear polymer obtained by co-oligomerisation and/or copolymerisation of a mixture comprising at least one monomer comprising two end-standing glycidyl groups and at least one monomer comprising two secondary amine groups, wherein the ratio of the number of end-standing glycidyl groups to the number of secondary amine groups in the mixture is between 1:1.1 and 1:2.75. The invention further relates to a liquid adhesive composition, to methods for producing the thermoplastic adhesive composition, and to methods for applying and removing the thermoplastic adhesive composition and the liquid adhesive composition.

## Description

### Technical field of the invention

The present invention relates to thermoplastic adhesive compositions, in particular de-bonding-on-demand (DoD) adhesive compositions. The invention further relates to methods for producing such thermoplastic adhesive compositions and to methods for applying them to and removing them from a substrate.

### Background

Adhesives with debonding-on-demand (DoD) capability are attracting fast-growing interest, because they allow controlled separation when triggered by external stimuli such as heat, light, or chemicals. These adhesives often include thermoplastic components, enabling reversible bonding, making them ideal for applications requiring easy disassembly and repair without damaging materials. DoD adhesives can thus simplify and improve manufacturing processes, extend the life cycle of products, and facilitate recycling.

One approach for DoD adhesives are supramolecular polymers, which can be (dis)assembled by an external stimulus, such as chemicals, heat, light, magnetic fields, electrical current, and ultrasound. The controlled (dis)assembly of supramolecular polymers allows switching their physical properties between an adhesive state and a non-adhesive state. Examples include glues based on hydrogen-bonding motifs, host-guest interactions such as cyclodextrin or cucurbituril inclusion complexes, metal-ligand complexes, and electrostatic interactions. However, the adhesive strength of supramolecular adhesives is generally limited to a few megapascals, which is lower than that of most commercial adhesives. Moreover, their synthesis is often quite complex, which limits their technological exploitability.

On the other hand, epoxy-based adhesives, i.e. adhesives comprising epoxy-based molecules, are widely recognized for their exceptional bonding strength, durability, and resistance to environmental factors, rendering them very attractive, for example in the watch industry. However, they are thermosetting adhesives, forming a three-dimensional cross-linked network upon curing. While this allows them to form strong bonds with a wide range of materials, once applied and cured, the formed bond cannot be easily adjusted or undone, and the formed bond can be brittle, limiting the use of epoxy-based adhesives in applications requiring "flexibility". In addition, the curing process can be time-consuming and often requires precise conditions, such as controlled temperatures and the use of curing agents, which can complicate the application process. The mixing of components (resin and hardener) must be done accurately to ensure optimal performance, which can be challenging and prone to errors. Further, recycling of these adhesives is difficult and costly.

To allow readjustment of bonded components, for example when their relative positioning is inadequate, epoxy-based adhesives having an extended working time (time until fully cured) have been developed, as well as UV-curing adhesives. However, these adhesives still present the problem of debonding the connected components and their recycling.

Shellac, a natural resin produced by the lac bug, is another DoD adhesive that has been used in the watchmaking as well as in other industries. Shellac can be applied as a solution in an alcohol that is subsequently dried, or as a hot-melt adhesive, and it can be de- and re-bonded, for example by the application of a solvent or by heating. The adhesive strength of shellac exceeds that of many supramolecular polymers; for example, stainless steel lap joints formed with shellac display a typical strength in the range of 7 MPa. However, its physicochemical properties depend significantly on its origin and the purification process applied, and the material is known to cross-link upon aging or heating. As a result, the adhesive properties, including the ability to de-bond and re-bond, show considerable variations.

### Summary of the invention

It is an aim of the present invention to overcome one or more of the foregoing drawbacks. It is an aim of the present invention to provide an adhesive composition, which provides high bonding strength as well as de-bonding-on-demand (DoD) properties, allowing easy readjustment of bonded components as well as easy removal of the adhesive, and easy recycling and/or reuse thereof. It is thus an aim to provide adhesive compositions that can be used for adjustable permanent adhesion applications, as well as for temporary adhesion applications, in particular in the watch industry.

It is a further aim to provide such adhesive compositions that have, in addition, an excellent resistance against moisture, sweat, and chemicals such as oils and cleaning agents, in particular cleaning agents used in the watch industry.

Yet another aim is to provide processes for producing such adhesive compositions, wherein the processes are less complex and/or less expensive than processes for producing prior art DoD adhesive compositions. It is a further aim to provide such processes, which have a high reproducibility, i.e., which, upon repetition, deliver adhesive compositions having the same properties.

It is a further aim to provide a process for applying such an adhesive to a substrate, the process allowing precise adhesion, showing excellent gap-filling, and being versatile.

Yet another aim is to provide a process for removing such an adhesive from a substrate to which it was previously applied, thereby offering easy removal and optionally recycling and/or reuse of the adhesive.

According to a first aspect of the present invention, there is disclosed a thermoplastic adhesive composition as set out in the appended claims.

The thermoplastic adhesive composition comprises or substantially consists of a linear oligomer and/or a linear polymer obtained by co-oligomerisation and/or copolymerisation of a mixture comprising at least one monomer comprising two end-standing glycidyl groups and at least one monomer comprising two secondary amine groups or one primary amine group.

In the light of the present disclosure, the term "secondary amine group" is used for an amine group capable to react with a single glycidyl group. In the present disclosure, "monomer comprising two secondary amine groups" and "diamine monomer" are used interchangeably and have thus the same meaning, i.e., both amine groups are secondary amine groups.

The term "primary amine group" is used for an amine group capable to react with two glycidyl groups. In the present disclosure, "monomer comprising one primary amine group" and "amine monomer" are used interchangeably and have thus the same meaning, i.e., the amine group is a primary amine group.

With "at least one monomer comprising two secondary amine groups or one primary amine group" is meant in the present disclosure one or a combination of a monomer comprising two secondary amine groups and a monomer comprising one primary amine group. The term is further used interchangeably with the term "(di)amine monomer" in the present disclosure.

In the present disclosure, "monomer comprising two end-standing glycidyl groups" and "diglycidyl monomer" are used interchangeably and have thus the same meaning, i.e. both glycidyl groups are end-standing.

The term "linear oligomer and/or a linear polymer" means in the present disclosure that the adhesive composition comprises or substantially consists of a linear oligomer or a linear polymer, or both.

Upon co-oligomerisation and/or co-polymerisation, the mixture, and more particularly, the monomers in the mixture react. Advantageously, when the monomers in the mixture react, the end-standing glycidyl groups react with the amine groups, thereby forming a linear oligomer and/or a linear polymer. As explained hereinabove, when the amine group is a secondary amine group, it will react with a single (one) glycidyl group, whereas when the amine group is a primary amine group, it will react with two glycidyl groups.

The ratio of the number of end-standing glycidyl groups to the number of amine groups in the mixture is between 1:1.1 and 1:2.75, preferably between 1:1.1 and 1:2, more preferably between 1:1.1 and 1:1.5, most preferably between 1:1.1 and 1:1.4. With "the number of amine groups" is meant in the present disclosure the total number of amine groups independent on whether it is a secondary amine group or a primary amine group. Said differently, "the number of amine groups" refers to the total number of secondary amine groups and, if present in the mixture, primary amine groups.

The inventors have discovered that for an excess of amine groups leading to a ratio higher than 1:2.75, for example a ratio of 1:3 and higher, the resulting thermoplastic adhesive composition is brittle. This can lead to inferior adhesive properties, in particular when a certain flexibility is to be provided by the bond or when the formed bond must be able to withstand a certain mechanical strain.

In other words, the mixture comprises an excess of amine groups, said differently, more amine groups than end-standing glycidyl groups, with at most 2.75 times more amine groups than end-standing glycidyl groups. The inventors have discovered that such an excess is essential to obtain an adhesive composition which is thermoplastic. More particularly, an excess of at most 2.75 times more amine groups than end-standing glycidyl groups allows the reaction of substantially all end-standing glycidyl groups of the diglycidyl monomer with an amine group, resulting in a linear oligomer and/or a linear polymer substantially devoid of cross-linkable groups, such as epoxy-groups.

It was further found that the excess of amine groups in the mixture with at most 2.75 times more amine groups than end-standing glycidyl groups allows to control and limit the degree of polymerization or oligomerization, and consequently the molecular weight of the obtained linear oligomer and/or linear polymer. Said differently, the molecular weight of the obtained oligomer and/or polymer decreases when the ratio of the number of end-standing glycidyl groups to the number of amine groups increases.

The inventors have discovered that it is the combination of the substantial absence of cross-linkable groups and the limitation of the molecular weight of the obtained linear oligomer and/or linear polymer that result in an adhesive composition which is thermoplastic. It was further found that a second result of this combination of features provides thermoplastic adhesive compositions that are at least partially soluble in a wide range of solvents, preferably organic solvents.

Advantageously, the mixture further comprises a monofunctional secondary amine monomer, wherein "secondary amine" is as hereinabove described. The term "monofunctional monomer" is used in the present disclosure for a monomer having a single (one) functional group. Said differently, a monofunctional secondary amine monomer is a monomer having as sole functional group a secondary amine group.

It is known in the technical field that the addition of a monofunctional secondary amine monomer to the mixture can contribute to limiting the molecular weight of the obtained oligomer and/or polymer, and thus to the thermoplastic character of the thermoplastic adhesive composition.

When the mixture comprises a monofunctional secondary amine monomer, this monomer contributes to the number of amine groups in the mixture. It will thus be understood that when the mixture comprises such a monomer, the ratio of the number of end-standing glycidyl groups to the number of amine groups provided by the monomer comprising two secondary amine groups or one primary amine group (thus excluding the amine groups provided by the monofunctional secondary amine monomer), in the mixture, is lower than the ratio of the number of end-standing glycidyl groups to the total number of amine groups in the mixture (thus including the amine groups provided by the monofunctional secondary amine monomer).

Advantageously, when the mixture comprises a monofunctional secondary amine monomer, the number of end-standing glycidyl groups can be equal to or lower than the number of amine groups provided by the monomer(s) comprising two secondary amine groups or one primary amine group, in the mixture, as long as the ratio of the number of end-standing glycidyl groups to the number of amine groups (thus including any amine groups provided by the monofunctional secondary amine monomer) in the mixture is between 1:1.1 and 1:2.75, preferably between 1:1.1 and 1:2, more preferably between 1:1.1 and 1:1.5, most preferably between 1:1.1 and 1:1.4.

Advantageously, when the mixture comprises a monofunctional secondary amine monomer, the ratio of the number of end-standing glycidyl groups to the number of amine groups provided by the monomer comprising two secondary amine groups or one primary amine group (thus excluding any amine groups provided by the monofunctional secondary amine monomer), in the mixture, is equal to or higher than 1:1 and lower than 1:2.75, preferably equal to or higher than 1:1 and lower than 1:2, more preferably equal to or higher than 1:1 and lower than 1:1.5, most preferably equal to or higher than 1:1 and lower than 1:1.4.

It will be understood that when the mixture does not comprise monomer(s) comprising one primary amine group (i.e. the (all) amine-group comprising monomer(s) is (are) monomers comprising two secondary amine groups), a ratio of 1:1 means a same number or moles of the monomer(s) comprising two end-standing glycidyl groups and the monomer(s) comprising two secondary amine groups. Said differently, in that case the mixture is an equimolar mixture of the monomer(s) comprising two end-standing glycidyl groups and the monomer(s) comprising two secondary amine groups.

Advantageously, the monomer comprising two end-standing amine groups is piperazine. Alternatively, yet advantageously, the diamine is a compound according to formula (I)

R¹-NH-R²-NH-R³ (I),

wherein
R¹ and R³, individually, are C₁₋₂₀ alkyl, preferably C₁₋₁₀ alkyl, more preferably C₁₋₆ alkyl, most preferably a C₁₋₂ alkyl, i.e. methyl or ethyl; and
R² is C₁₋₂₀ alkylene, preferably C₁₋₁₀ alkylene, more preferably C₁₋₆ alkylene, most preferably a C₁₋₂ alkylene, in particular methylene or ethylene.

With "individually" is meant that R¹ and R³ can be the same or can be different.

Particular examples of monomers comprising two end-standing amine groups according to formula (I) are N,N'-dimethyl ethylenediamine (R¹ and R³ are methyl and R² is ethylene) and N,N'-diethyl ethylenediamine (R¹ and R³ are ethyl and R² is ethylene).

Advantageously, the monomer comprising two end-standing glycidyl groups is a bisphenol A diglycidyl ether (BADGE) according to formula (II) 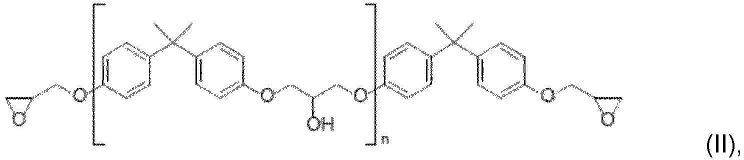 wherein n is between 0 and 10, preferably between 0 and 5, more preferably between 1 and 4, such as between 2 and 3.

A particular example of the linear oligomer and/or the linear polymer is a linear oligomer and/or a linear polymer obtained by the co-oligomerisation and/or the co-polymerisation of a glycidyl monomer according to formula (II), preferably wherein n is between 0 and 3, and piperazine, N,N'-dimethyl ethylenediamine or N,N'-diethyl ethylenediamine, preferably piperazine, as diamine monomer.

Advantageously, the number average molecular weight, Mₙ, of said linear oligomer and/or linear polymer is between 5000 and 30000 g/mol, preferably between 6000 and 27500 g/mol, more preferably between 7500 and 25000 g/mol. In the present disclosure, the number average molecular weight is determined based on calibrations with poly(methyl methacrylate) standards of data measured by Size Exclusion Chromatography (SEC) using *N,N*-dimethylformamide as eluent.

Advantageously, the linear oligomer and/or linear polymer has a glass transition temperature (T_{g}) between 50 and 150 °C, preferably between 60 and 130 °C, more preferably between 70 and 120 °C. In the present disclosure, the glass transition temperature is measured by Differential Scanning Calorimetry (DSC) using two heating/cooling cycles with heating/cooling rates of 10 °C/min, wherein the T_{g} values are reported for the second heating cycle.

According to a second aspect of the present invention, there is disclosed a liquid adhesive composition as set out in the appended claims. The liquid adhesive composition comprises a thermoplastic adhesive composition according to the first aspect and further comprises an organic solvent. Advantageously, the linear oligomer and/or linear polymer of the thermoplastic adhesive composition is (are) at least partially, and preferably substantially entirely dissolved in the organic solvent. With "at least partially dissolved" is meant in the present disclosure that at least 50%, preferably at least 75%, more preferably at least 85% of the linear oligomer and/or linear polymer is dissolved in the organic solvent. Such an adhesive composition can be used as a liquid adhesive, thereby allowing easy application and easy gap-filling.

Advantageously, the organic solvent is selected from the list consisting of *N*,*N*-dimethylformamide (DMF), dimethyl sulfoxide (DMSO), tetrahydrofuran (THF), trichloromethane (CHCl₃), and butyl glycol (BG). Particularly preferred examples of organic solvents include DMF and BG.

Advantages of the liquid adhesive compositions of the present disclosure are, without being limited thereto, an easy application, excellent gap filling due to a good flowability, and the possibility to apply low thicknesses, while allowing re-adjustment and de-bonding on demand (DoD).

An advantage of the thermoplastic adhesive compositions of the present invention is that they can be softened, even up to a point where they can be considered to flow, when heating them to a temperature higher than its glass transition temperature. This allows their use as a hot-melt adhesive. Said differently, the thermoplastic adhesive compositions of the present invention can both be used in a liquid adhesive composition as described hereinabove, and as a hot-melt adhesive composition.

The thermoplastic behaviour of the inventive thermoplastic adhesive compositions allows easy readjustment of any substrate or component to which it is provided, simply by heating the adhesive composition to a temperature higher than its glass transition temperature. This offers very precise adhesion and its use as an adjustable permanent adhesive, i.e., an adhesive that is meant to permanently bond two substrates, with the possibility of easy readjustment in case the bonding is not within specifications.

In addition, the thermoplastic character of the adhesive compositions allows their easy removal from the substrate or component to which they were applied, as well as the debonding of objects joined (glued together) by the adhesive compositions by heating the glued assembly to a temperature higher than the glass transition temperature of the thermoplastic adhesive composition. The adhesive composition softens and can then be removed from the substrates or components. This offers easy recycling and allows reuse of the adhesive composition in further applications.

Alternatively or additionally, it is also possible to remove the adhesive composition from the substrate or component to which it was applied, as well as debonding or disassembling of objects glued together by the adhesive composition by contacting the adhesive composition or the bond to an organic solvent in which the linear oligomer and/or linear polymer of the adhesive at least partially dissolves.

It will be understood that removal and disassembly (debonding) can also be realised by a combination of the foregoing methods (softening and dissolving).

The inventors have found that both softening of the adhesive composition and dissolution in an organic solvent does not alter the molecular structure of the linear oligomer and/or linear polymer. In other words, the adhesive compositions of the present invention can also be used as a temporary adhesive in a wide variety of applications.

Further, any broken adhesive bonds can easily be reformed by heating and softening the adhesive composition, followed by readjustment of the parts and cooling down. The inventors have discovered that such a reforming leads to bonds that are as strong as the initial bond, i.e. without any loss in adhesive strength.

The inventors have discovered that in addition to this thermoplastic character allowing for readjustment of bonds and de-bonding-on-demand, the adhesive compositions of the present invention allow to achieve very strong bonds, exceeding the bonding strength that is achieved by prior art DoD adhesives such as shellac and supramolecular adhesives.

According to a third aspect of the present invention, there is disclosed a method of producing a thermoplastic adhesive composition as set out in the appended claims. In particular, the third aspect of the invention is related to a method of producing a thermoplastic adhesive composition comprising a linear oligomer and/or a linear polymer. Advantageously, the thermoplastic adhesive composition is according to the first aspect of the present invention.

The method comprises or substantially consists of reacting a mixture comprising at least one monomer comprising two end-standing glycidyl groups and at least one monomer comprising two secondary amine groups or one primary amine group.

The mixture is as hereinabove described. In other words, the monomers are as hereinabove described. Additionally, the ratio of the number of end-standing glycidyl groups to the number of amine groups in the mixture is as hereinabove described. Advantageously, the mixture further comprises a monofunctional secondary amine monomer as hereinabove described.

Advantageously, the reaction is performed in an inert atmosphere. The inert atmosphere advantageously comprises or substantially consists of helium, argon, nitrogen and combinations of two or more thereof, preferably nitrogen.

Advantageously, the reaction is performed in the presence of a solvent. Advantageously, the solvent is *N*,*N*-dimethylformamide or butyl glycol. Advantageously, the method comprises at least partially dissolving the diglycidyl monomer in the solvent. Advantageously, the method comprises at least partially dissolving the (di)amine monomer in the solvent.

Advantageously, the reaction is performed at a temperature between 50 °C and 120 °C, preferably between 60 °C and 100 °C, more preferably between 70 °C and 90 °C, such as 80 °C.

A further aspect of the present invention discloses a method of applying the thermoplastic adhesive composition of the first aspect of the invention or the liquid adhesive composition of the second aspect of the invention to a substrate, as set out in the appended claims.

According to a first embodiment, starting from the thermoplastic adhesive composition of the first aspect, the method comprises at least partially dissolving the linear oligomer and/or linear polymer of the thermoplastic adhesive composition in an organic solvent, thereby obtaining the liquid adhesive composition of the second aspect, applying the liquid adhesive composition to the substrate, and removing the organic solvent. Removal of the organic solvent solidifies the liquid adhesive composition. The solvent can be removed by means known in the art, for example by evaporation.

According to a second embodiment, starting from the liquid adhesive composition of the second aspect, the method comprises applying the liquid adhesive composition to the substrate and removing the organic solvent. Removal of the organic solvent solidifies the liquid adhesive composition. The solvent can be removed by means known in the art, for example by evaporation.

The solvent is selected from the group consisting of *N*,*N*-dimethylformamide, dimethyl sulfoxide, tetrahydrofuran, trichloromethane and butyl glycol.

Yet another aspect of the present invention discloses a method of removing the thermoplastic adhesive composition of the first aspect of the invention or the liquid adhesive composition of the second aspect of the invention from a substrate as set out in the appended claims.

The method comprises contacting the substrate with an organic solvent, thereby at least partially dissolving the linear oligomer and/or linear polymer of the thermoplastic adhesive composition, thereby obtaining the liquid adhesive composition of the second aspect. The substrate can be contacted with the organic solvent by means known in the art, such as rinsing the substrate with the solvent, or submersing the substrate in the solvent.

The method can further comprise removing the organic solvent from the liquid adhesive composition of the second aspect, thereby obtaining the thermoplastic adhesive composition of the first aspect. The solvent can be removed by means known in the art, for example by evaporation.

The solvent is selected from the group consisting of *N*,*N*-dimethylformamide, dimethyl sulfoxide, tetrahydrofuran, trichloromethane and butyl glycol.

The liquid adhesive composition as well as the thermoplastic adhesive composition can then be reused and applied to a substrate according to the method hereinabove described.

The present invention further relates to the use of the adhesive composition of the first aspect or the liquid adhesive composition of the second aspect as an adjustable permanent adhesive or as a temporary adhesive, preferably for watch components.

### Description of the figures

Aspects of the invention will now be described in more detail with reference to the appended drawings, wherein same reference numerals illustrate same features and wherein:
- Figure 1 shows the shear-stress vs. strain curves of stainless steel lap joints bonded with four inventive adhesive compositions used as hot-melt (adhesion test);
- Figure 2 shows the shear-stress vs. strain curves of stainless steel lap joints bonded with four inventive adhesive compositions used as liquid-adhesives (adhesion test);
- Figure 3 shows the shear-stress vs. strain curves of stainless steel lap joints re-bonded with the four inventive adhesive compositions used as hot-melt (adhesion test);
- Figure 4 shows the shear-stress vs. strain curves of stainless steel lap joints re-bonded with the four inventive adhesive compositions used as hot-melt (adhesion test);
- Figure 5 shows the stress vs. strain curves of three inventive adhesive compositions used as 200 µm thick films (tensile test);
- Figure 6 shows the dynamic mechanical analysis (DMA) results for four inventive adhesives;
- Figure 7 shows the shear storage and loss modulus for a first inventive adhesive (rheology testing);
- Figure 8 shows the shear storage and loss modulus for a second inventive adhesive (rheology testing);
- Figure 9 shows the shear storage and loss modulus for a third inventive adhesive (rheology testing).

### Detailed description of the invention

The thermoplastic adhesive compositions of the present disclosure comprise a linear oligomer and/or a linear polymer obtained by co-oligomerisation and/or copolymerisation of a mixture comprising at least one monomer comprising two end-standing glycidyl groups ("diglycidyl monomer") and at least one monomer comprising two secondary amine groups ("diamine monomer") or one primary amine group ("amine monomer") (in short "(di)amine monomer").

Advantageously, the diamine monomer is a linear molecule according to formula (I)

R¹-NH-R²-NH-R³ (I).

Advantageously, R² is a C₁₋₂₀ alkylene, i.e. -CₓH₂ₓ- wherein x is between 1 and 20. R² can be linear or branched. Preferably R² is a C₁₋₁₀ alkylene, more preferably a C₁₋₆ alkylene, most preferably a C₁₋₄ alkylene. Non-limiting examples of R² include -(CH₂)₂-, -CH(CH₃)CH₂-, -(CH₂)₃-, -(CH₂)₄-, and -CH(CH₃)CH(CH₃)-. A particularly preferred example of R² is ethylene.

Advantageously, R¹ is a C₁₋₂₀ alkyl, i.e. -C_{y}H_{2y+1}, wherein y is between 1 and 20. R¹ can be linear or branched. Preferably R¹ is a C₁₋₁₀ alkyl, more preferably a C₁₋₆ alkyl, most preferably a C₁₋₄ alkyl, in particular methyl, ethyl, n-propyl, isopropyl, n-butyl or isobutyl, more preferably methyl or ethyl.

Advantageously, R³ is a C₁₋₂₀ alkyl, i.e. -C_{z}H_{2z+1}, wherein z is between 1 and 20. R³ can be linear or branched. Preferably R³ is a C₁₋₁₀ alkyl, more preferably a C₁₋₆ alkyl, most preferably a C₁₋₄ alkyl, in particular methyl, ethyl, n-propyl, isopropyl, n-butyl or isobutyl, more preferably methyl or ethyl.

Non-limiting examples of diamine monomers according to formula (I) include: N,N'-dimethyl-1,2-diaminoethane (CAS 110-70-3), N,N'-diethyl-1,2-diaminoethane (CAS 111-74-0), N,N'-diisopropyl-1,2-diaminoethane (CAS 2213-43-6), N,N'-diisobutyl-1,2-diaminoethane (CAS 13987-78-3), N,N'-dimethyl-1,3-diaminopropane (CAS 3855-32-1), N,N'-diethyl-1,3-diaminopropane (CAS 6624-19-9) and N,N'-di-n-propyl-1,2-diaminoethane (CAS 7219-50-5).

Alternatively, yet advantageously, the diamine monomer is a cyclic molecule. Non-limiting examples of cyclic diamines include cyclohexanes comprising two secondary amine groups, such as piperazine (also known as 1,3-diazacyclohexane, CAS 110-85-0); cyclopentanes comprising two secondary amine groups, such as 1,3-diazacyclopentane (also known as imidazolidine, CAS 462-88-4); and cyclooctanes comprising two secondary amine groups, such as triethylenediamine (also known as 1,4-diazabicyclo[2.2.2]octane, CAS 280-57-9). A particularly preferred cyclic diamine monomer is piperazine.

Advantageously, the amine monomer, when present, is a compound according to formula (III), (IV), or (V), or is benzylamine or aniline:

R⁴-NH₂ (III),

R⁵-O-(CH₂)ₓ-NH₂ (IV),

(HOR⁶)₃-C-(CH₂)_{y}-NH₂ (V).

In formula (III), R⁴ is advantageously C₃₋₈ alkyl, preferably a C₃₋₆ alkyl, in particular n-propyl, isopropyl, n-butyl or isobutyl. R⁴ can be linear or branched.

Non-limiting examples of the amine monomer according to formula (III) include n-propylamine, isopropylamine, n-butylamine and isobutylamine.

In formula (IV), R⁵ is advantageously a C₁₋₈ alkyl, preferably a C₁₋₆ alkyl, more preferably a C₁₋₄ alkyl, in particular methyl or ethyl. R⁵ can be linear or branched.

In formula (IV), x is advantageously between 1 and 8, preferably between 1 and 6, more preferably between 1 and 4, in particular 1 or 2.

Non-limiting examples of the amine monomer according to formula (IV) include 2-methoxyethylamine, 2-ethoxyethylamine, 2-methoxymethylamine and 2-ethoxymethylamine.

In formula (V), R⁶ is advantageously a C₁₋₈ alkyl, preferably a C₁₋₆ alkyl, more preferably a C₁₋₄ alkyl, in particular methyl or ethyl. R⁶ can be linear or branched.

In formula (V), y is advantageously between 0 and 6, preferably between 0 and 4, more preferably between 0 and 2, in particular 0 or 1.

Non-limiting examples of the amine monomer according to formula (V) include tri(hydroxymethyl)aminomethane and tri(hydroxymethyl)aminoethane.

The diglycidyl monomer is advantageously a bisphenol A diglycidyl ether (BADGE). Advantageously, the BADGE monomer has a number average molecular weight between 200 and 2000 g/mol, preferably between 250 and 1500 g/mol, more preferably between 300 and 1200 g/mol.

The mixture can further comprise an additional compound providing glycidyl groups to the mixture. Additionally or alternatively, the mixture can further comprise an additional compound providing amine groups to the mixture. Preferably, the additional compound providing amine groups to the mixture is a monofunctional secondary amine monomer, i.e., a monomer comprising a secondary amine as single functional group.

It is known in the art that the addition of a monofunctional secondary amine monomer can act as a chain stopper. Said differently, it is known that a monofunctional secondary amine monomer can control and limit the polymerization of bifunctional monomers (i.e., monomers comprising two functional groups) by introducing chain ends that have no reactive groups to the formed co-oligomer and/or co-polymer. Therefore, the addition of a monofunctional secondary amine monomer can have a similar effect as the use of an excess of the (di)amine monomer and contributes to the formation of linear oligomers and/or linear polymers having a shorter chain length and, thus, a lower molecular weight.

The thermoplastic adhesive compositions of the invention are obtained by reacting the amine groups in the mixture with the end-standing glycidyl groups in the mixture. Upon reacting the glycidyl groups with the amine groups, an co-oligomerisation and/or a co-polymerisation takes place. Advantageously, the co-oligomerisation and/or the co-polymerisation takes place a temperature between 50 °C and 120 °C in an inert atmosphere, preferably nitrogen.

Advantageously, the (di)amine monomer and the diglycidyl monomer are at least partially dissolved in the organic solvent prior to contacting the amine groups with the glycidyl groups. According to a first embodiment, the diglycidyl monomer is at least partially dissolved separately from the (di)amine monomer, followed by contacting the at least partially dissolved monomers to react the glycidyl groups with the amine groups. This embodiment provides control over the dissolution and the co-oligomerisation and/or co-polymerisation reaction. According to another embodiment, the diglycidyl monomer and the (di)amine monomer are at least partially dissolved together.

When one or both of the monomers are at least partially dissolved in the organic solvent, the method advantageously comprises a step of precipitating the obtained linear oligomer and/or linear polymer. Precipitating the linear oligomer and/or linear polymer can be done by methods known in the art, for example by contacting with a solvent wherein the linear oligomer and/or linear polymer is not soluble (i.e., a non-solvent for the linear oligomer and/or linear polymer). A particularly suitable non-solvent for the linear oligomer and/or linear polymer is methanol.

When a precipitation step is performed, the method advantageously further comprises a step of separating the precipitated linear oligomer and/or linear polymer from the non-solvent. Such a separation step can be done by methods known in the art, such as, without being limited thereto, filtering and centrifugation.

Optionally, the separated linear oligomer and/or linear polymer can further be washed with the non-solvent to remove any residual solvent. Washing can be performed by methods known in the art. Optionally the separated linear oligomer and/or linear polymer can be dried, advantageously by methods known in the art, such as at elevated temperature and/or at reduced pressure. Advantageously, the drying is performed so as to prevent the linear oligomer and/or linear polymer from softening, i.e., at a temperature below its glass transition temperature.

Advantageously, when the diglycidyl monomer is a BADGE according to formula (II) and the (di)amine monomer is a diamine monomer (i.e., the reaction mixture is substantially free of monomers comprising one primary amine group), the resulting linear oligomer and/or linear polymer has a repeat unit according to formula (VI) 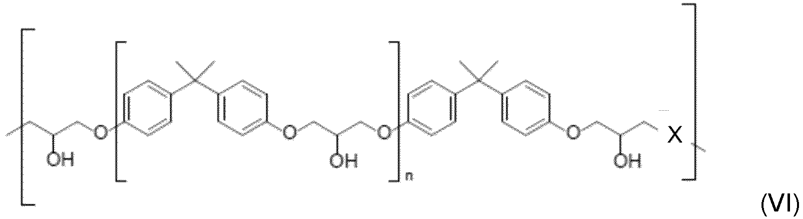 wherein
n is as hereinabove described; and X is -N(R¹)-R²-N(R³)- or 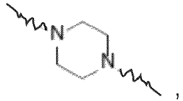 wherein R¹, R² and R³ are as hereinabove described.

For example, when the diamine monomer is piperazine, the repeat unit of the linear oligomer and/or the linear polymer advantageously is according to formula (VII): 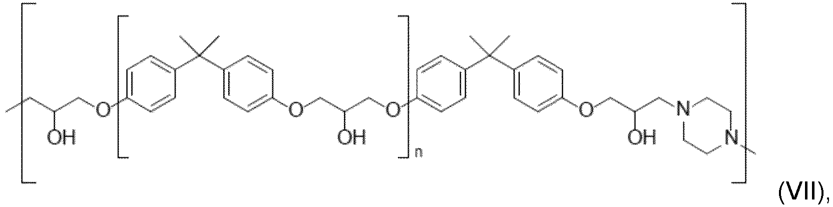 wherein n is as hereinabove described.

For example, when the diamine monomer is N,N'-dimethyl-1,2-diaminoethane (i.e., R¹ and R³ are methyl and R² is ethylene), the repeat unit of the linear oligomer and/or the linear polymer advantageously is according to formula (VIII): 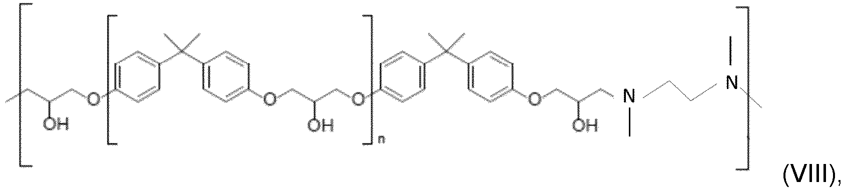 wherein n is as hereinabove described.

For example, when the diamine monomer is N,N'-diethyl-1,2-diaminoethane (i.e., R¹ and R³ are ethyl and R² is ethylene), the repeat unit of the linear oligomer and/or the linear polymer advantageously is according to formula (IX): 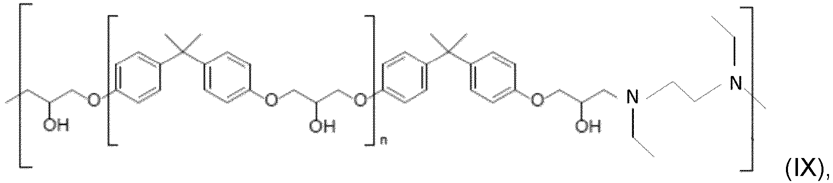 wherein n is as hereinabove described.

It will be understood that by varying the ratio of the number of end-standing glycidyl groups to the number of amine groups and the molecular weight of the diglycidyl monomer, the molecular weight of the obtained linear oligomer and/or linear polymer can be varied. It is known that the molecular weight affects the physical properties of oligomers and polymers, such as the glass transition temperature (T_{g}), solubility, melt viscosity, the viscosity of solutions, and adhesive strength. The applicants have discovered that using these principles for molecular weight control affords thermoplastic adhesive compositions that are at least partially soluble in a wide range of solvents, provide high bonding strength as well as de-bonding-on-demand (DoD) properties, allowing easy readjustment of bonded components as well as easy removal of the adhesive, and easy recycling and/or reuse thereof.

### Examples

Three reference thermoplastic adhesive compositions and six thermoplastic inventive adhesive compositions were prepared using the monomers and molar ratios of Table 1, wherein BADGE stands for glycidyl end-capped poly(bisphenol A-*co*-epichlorohydrin), which is a monomer having two end-standing glycidyl groups; DMEDA stands for *N,N'*-dimethylethylenediamine and DEEDA stands for *N*,*N'*-diethylethylenediamine.

**Table 1: Monomers and molar ratios of adhesive compositions**

| **Sample Name** | **Reference or Inventive** | **Monomer 1** | **Monomer 2** | **Molar ratio monomer 1 : monomer 2** |
|---|---|---|---|---|
| PGE₂-PP | Reference | phenyl glycidyl ether (PGE) | Piperazine (PP) | 2:1 |
| BADGE₁₀₇₅PP_{1.0} | Reference | BADGE, Mₙ 1075 g/mol | Piperazine | 1:1 |
| BADGE₁₀₇₅PP_{1.1} | Inventive | BADGE, Mₙ 1075 g/mol | Piperazine | 1:1.1 |
| BADGE₁₀₇₅PP_{1.2} | Inventive | BADGE, Mₙ 1075 g/mol | Piperazine | 1:1.2 |
| BADGE₁₀₇₅PP_{1.3} | Inventive | BADGE, Mₙ 1075 g/mol | Piperazine | 1:1.3 |
| BADGE₁₀₇₅PP_{1.4} | Inventive | BADGE, Mₙ 1075 g/mol | Piperazine | 1:1.4 |
| BADGE₁₀₇₅PP_{3.0} | Reference | BADGE, Mₙ 1075 g/mol | Piperazine | 1:3 |
| BADGE₁₀₇₅DMEDA_{1.3} | Inventive | BADGE, Mₙ 1075 g/mol | DMEDA | 1:1.3 |
| BADGE₁₀₇₅DEEDA_{1.3} | Inventive | BADGE, Mₙ 1075 g/mol | DEEDA | 1:1.3 |

Reference adhesive composition PGE₂-PP was produced by adding 1.00 g PGE (6.7 mmol) and 0.287 g piperazine (3.33 mmol) in 3 mL *N*,*N*-dimethylformamide (DMF) as solvent. The mixture was stirred under N₂ at 80 °C for 24 hours and was then precipitated hot into a 10-fold excess of methanol. A white precipitate was obtained and was filtered off, washed three times with methanol and dried in vacuo at 90 °C for 48 hours.

The BADGEₓPP_{y} reference and inventive adhesive compositions were prepared as follows. A first solution was prepared by fully dissolving the respective amount of BADGE given in Table 2 in DMF by stirring under N₂ at room temperature. A second solution was prepared by dissolving the respective amount of piperazine (PP) given in Table 2 in DMF. The second solution was then added to the first solution, and let to react at 80 °C under N₂ for 24 hours, while stirring was continued. The reaction mixture was then precipitated hot into a 10-fold excess of methanol. A white precipitate was obtained and was filtered off, washed three times with methanol and dried in vacuo at 90 °C for 48 hours.

**Table 2: Respective amounts of monomers for adhesive compositions**

| **Sample Name** | **BADGE** | | **PP** | |
|---|---|---|---|---|
| BADGE₁₀₇₅PP_{1.0} | 2.00 g | 1.86 mmol | 0.162 g | 1.86 mmol |
| BADGE₁₀₇₅PP_{1.1} | 3.00 g | 2.79 mmol | 0.265 g | 3.07 mmol |
| BADGE₁₀₇₅PP_{1.2} | 11.00 g | 10.2 mmol | 1.06 g | 12.3 mmol |
| BADGE₁₀₇₅PP_{1.3} | 11.00 g | 10.2 mmol | 1.15 g | 13.3 mmol |
| BADGE₁₀₇₅PP_{1.4} | 2.00 g | 1.86 mmol | 0.224 g | 2.6 mmol |
| BADGE₁₀₇₅PP_{3.0} | 1.00 g | 0.93 mmol | 0.241 g | 2.79 mmol |

BADGE₁₀₇₅PP_{1.2} and BADGE₁₀₇₅PP_{1.3} were also prepared in butyl glycol (BG) as solvent. BADGE₁₀₇₅PP_{1.2} was prepared as follows. A first solution was prepared by fully dissolving the 20.00 g (18.60 mmol) BADGE in 40 mL BG by stirring under N₂ at 120 °C, followed by cooling the mixture to 80 °C. A second solution was prepared by dissolving 1.92 g (22.3 mmol) piperazine (PP) in 20 mL BG. The second solution was then added to the first solution, and let to react at 80 °C under N₂ for 24 hours, while stirring was continued. The reaction mixture was then precipitated hot into a 10-fold excess of methanol. A white precipitate was obtained and was filtered off, washed three times with methanol and dried in vacuo at 90 °C for 48 hours. BADGE₁₀₇₅PP_{1.3} was prepared in the same way, but by dissolving 30.00 g (27.90 mmol) BADGE in 60 mL BG and by dissolving 3.13 g (36.30 mmol) PP in 30 mL BG.

BADGE₁₀₇₅DMEDA_{1.3} and BADGE₁₀₇₅DEEDA_{1.3} were prepared by adding 1.00 g (0.93 mmol) BADGE to 3 mL DMF as solvent, followed by stirring at room temperature under N₂ until the BADGE was fully dissolved. Then, 0.107 g (1.21 mmol) DMEDA or 0.141 g (1.21 mmol) DEEDA, respectively, was added to the solution, followed by heating at 80 °C for 30 hours under N₂ and continuous stirring. The reaction mixture was then precipitated hot into a 10-fold excess of methanol. A white precipitate was obtained and was filtered off, washed three times with methanol and dried in vacuo at 90 °C for 48 hours.

Table 3 shows the number average molecular weight (Mₙ), the dispersity (D) values and the glass transition temperature (T_{g}) of the obtained adhesive compositions.

Mₙ and the dispersity (D) values were determined from size exclusion chromatography (SEC) based on a calibration using poly(methyl methacrylate) (PMMA) standards. SEC measurements were carried out on an Agilent Technologies 1200 series HPLC system equipped with an Agilent PLgel mixed guard column (particle size = 5 µm) and two Agilent PLgel mixed-D columns (ID = 7.5 mm, L = 300 mm, particle size = 5 µm). DMF was used as the eluent, the flow rate was 1.0 mL min⁻¹, and UV (Agilent 1200 series, λ = 346 nm) and refractive index (Wyatt Technology Corp., Optilab REX interferometric refractometer) detectors were used to monitor the signal. Data were processed with Astra software (Wyatt Technology Corp.).

The T_{g} was determined by differential scanning calorimetry (DSC). DSC measurements were conducted on a Mettler-Toledo STAR instrument at a temperature range from -20 to 200 °C. Starting at -20°C, samples were subjected to two heating/cooling cycles with heating/cooling rates of 10 °C min⁻¹. Measurements were performed in standard aluminum pans using approximately 5 mg of sample for each measurement and unless otherwise noted, data are reported for the second heating cycle.

**Table 3: Mₙ, dispersity and T_{g} of the adhesive compositions**

| **Sample Name** | **Reference or Inventive** | **Solvent** | **Mₙ (g/mol)** | **Ð (-)** | **T_{g} (°C)** |
|---|---|---|---|---|---|
| BADGE₁₀₇₅PP_{1.0} | Reference | DMF | - | - | 103 |
| BADGE₁₀₇₅PP_{1.1} | Inventive | DMF | 20800 | 3.0 | 100 |
| BADGE₁₀₇₅PP_{1.2} | Inventive | DMF | 15350 | 2.4 | 90 |
| BADGE₁₀₇₅PP_{1.2} | Inventive | BG | 15300 | 2.4 | 95 |
| BADGE₁₀₇₅PP_{1.3} | Inventive | DMF | 12510 | 2.3 | 91 |
| BADGE₁₀₇₅PP_{1.3} | Inventive | BG | 11800 | 1.8 | 87 |
| BADGE₁₀₇₅PP_{1.4} | Inventive | DMF | 8500 | 1.9 | 88 |
| BADGE₁₀₇₅PP_{3.0} | Reference | DMF | 4200 | 1.5 | 90 |
| BADGE₁₀₇₅DMEDA_{1.3} | Inventive | DMF | 8400 | 2.1 | 73 |
| BADGE₁₀₇₅DEEDA_{1.3} | Inventive | DMF | 10600 | 2.1 | 74 |

The reference adhesive composition BADGE₁₀₇₅PP_{1.0}, made with an equimolar amount of BADGE and PP, was found to be insoluble in DMF, making it impossible to perform SEC to determine its Mₙ and (D). It was noticed that using DMF or BG as solvent lead to adhesive compositions having similar Mₙ, and (D). The T_{g} of the adhesive compositions made with DMEDA and DEEDA as diamine monomer are significantly lower than the ones made with piperazine (71 °C and 74 °C vs. 91 °C, respectively). This can be explained by the higher flexibility of the non-cyclic diamines DMEDA and DEEDA vs. the cyclic piperazine. This demonstrates that it is possible to easily tune the adhesive's properties by changing the diamine monomer.

All adhesive compositions made with an excess of the diamine monomer (PP, DMEDA and DEEDA) were found to be soluble in DMF, DMSO, THF, CHCl₃, and butyl glycol (BG), and amounts of 33 % by weight and even up to 56 % by weight could be dissolved.

The fact that it was possible to obtain a well-defined glass transition temperature confirms the thermoplastic character of the adhesives. Despite the thermoplastic character of the adhesives, unexpectedly high adhesion strengths were measured.

To test the possibility to use the adhesive compositions as hot-melt adhesive, films having a thickness of 100 µm were prepared from the adhesive compositions by dissolving 100 mg of the adhesive composition in 2 mL CHCl₃. The solutions were then cast into poly(tetrafluoroethylene) (PTFE) Petri dishes with a diameter of 6 cm, which were left in a well-ventilated fume hood overnight. The Petri dishes were subsequently placed in a vacuum oven at 50 °C for 24 h. The samples were removed from the mould and compression-moulded between two PTFE sheets in a Carver^{®} press at 110 °C and a pressure of 4 tons for 10 min.

The 100 µm thick films were then cut into 1 cm² pieces, and lap joints for adhesive testing were prepared with stainless steel substrates (width: 10.0 mm, length: 80.0 mm, thickness: 1.0 mm) and had an overlap area of 1 cm². The 1 cm² film pieces were placed onto the end of one of two stainless steel substrates, and both substrates were placed separately on a hot plate heated to 120 °C. When the adhesive had formed a viscous liquid, the two substrates were overlapped to sandwich the adhesive, the joint thus formed was placed back on the hot plate, and gentle pressure was applied by placing a 100 g weight on top of the bonded lap joints. After 10 min, the joint was mechanically fixed with clamps and allowed to cool to room temperature, after which the clamps were removed. It was noticed that the film obtained with the reference adhesive composition BADGE₁₀₇₅PP₃ was very brittle. No films could be processed with reference adhesive composition BADGE₁₀₇₅PP_{1.0}, and tensile testing was performed on lap joints formed with the as-synthesized adhesive solid. The films obtained with BADGE₁₀₇₅PP_{3.0} were too brittle to measure.

In addition, lap joints were also prepared using the adhesive compositions as liquid adhesive compositions (i.e., as solutions). Two stainless steel substrates (width: 10.0 mm, length: 80.0 mm, thickness: 1.0 mm) were placed on a hot plate heated to 120 °C for 5 minutes. The adhesive compositions were dissolved in BG to obtain a solution comprising 33 % by weight of the adhesive composition. Two drops of the adhesive-BG solution were placed on one of the two stainless steel substrates, which were then overlapped to sandwich the adhesive. The joint thus formed was placed back on the hot plate, and gentle pressure was applied by placing a 100 g weight on top of the bonded lap joints. After 10 min, the joint was mechanically fixed with clamps and placed in an oven set to 120 °C to achieve complete solvent evaporation. After 60 min, the samples were removed from the oven and allowed to cool to room temperature, after which the clamps were removed.

It was found that the reference adhesive composition BADGE₁₀₇₅PP_{1.0}, made with an equimolar amount of BADGE and PP, was insoluble in BG, limiting its use as a liquid adhesive. No liquid adhesive lap joint could thus be made for this adhesive, and consequently no adhesion testing was performed. The reference adhesive composition BADGE₁₀₇₅PP₃ could be dissolved in BG, but the obtained joint was very brittle.

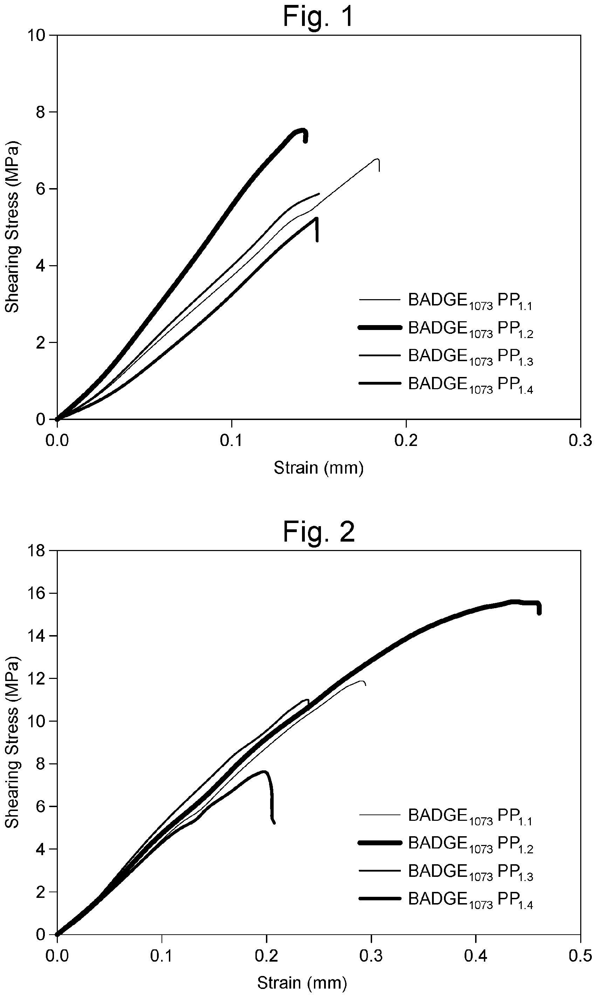

Adhesion testing on the lap joints was carried out at ambient temperature on a Zwick/Roell Z010 tensile tester equipped with mechanical gripping clamps and a 10 kN load cell, at a strain rate of 1 mm min⁻¹. Table 4 shows the shear strengths (in MPa) that were measured for the hot-melt adhesives and the liquid adhesives. Figs. 1 and 2 show the shear-stress vs. strain curves of the stainless steel lap joints bonded with the hot-melt adhesives and the liquid adhesives, respectively, for the inventive adhesive compositions BADGE₁₀₇₅PP_{1.1}, BADGE₁₀₇₅PP_{1.2} obtained with DMF as solvent, BADGE₁₀₇₅PP_{1.3} obtained with DMF as solvent, and BADGE₁₀₇₅PP_{1.4}.

**Table 4: Shear strength of adhesive compositions as hot-melt and as liquid**

| **Sample Name** | **Solvent** | **Mₙ (g/mol)** | **Hot-Melt (MPa)** | **Liquid (MPa)** |
|---|---|---|---|---|
| *BADGE₁₀₇₅PP_{1.0}* | *DMF* | - | *8.8* ± *0.5* | - |
| BADGE₁₀₇₅PP_{1.1} | DMF | 20800 | 6.8 ± 0.2 | 12.0 ± 0.4 |
| BADGE₁₀₇₅PP_{1.2} | DMF | 15350 | 7.5 ± 0.2 | 16.0 ± 0.5 |
| BADGE₁₀₇₅PP_{1.2} | BG | 15300 | 7.1 ± 0.2 | 12.8 ± 0.2 |
| BADGE₁₀₇₅PP_{1.3} | DMF | 12510 | 5.8 ± 0.1 | 11.0 ± 0.3 |
| BADGE₁₀₇₅PP_{1.3} | BG | 11800 | 6.0 ± 0.2 | 8.0 ± 0.2 |
| BADGE₁₀₇₅PP_{1.4} | DMF | 8500 | 5.2 ± 0.1 | 7.6 ± 0.3 |
| *BADGE₁₀₇₅PP_{3.0}* | *DMF* | 4200 | *4.4* ± *0.3* | *5.1* ± *0.3* |
| BADGE₁₀₇₅DMEDA_{1.3} | DMF | 8400 | 7.4 ± 0.3 | 9.8 ± 0.3 |
| BADGE₁₀₇₅DEEDA_{1.3} | DMF | 10600 | 6.2 ± 0.3 | 8.6 ± 0.2 |

From Table 4 it is clear that for all inventive adhesive compositions, both used as hot-melt and as liquid adhesive, excellent adhesive strengths of at least 5.2 MPa (hot-melt of BADGE₁₀₇₅PP_{1.4}) and even up to 16.0 MPa (liquid adhesive with BADGE₁₀₇₅PP_{1.2} produced in DMF) were measured. Looking at the BADGE₁₀₇₅PP_{y} series produced in DMF, the bonding strength (adhesion strength) increases with increasing Mₙ for both hot-melt and liquid adhesives. The adhesive strength obtained with the inventive adhesives as hot-melt are comparable to the bond strength that is reported in literature for shellac (approx. 6.9 MPa).

The values obtained for the adhesives made with BG as solvent are similar to the values for the adhesives made with DMF (same molar ratio). Further, changing the piperazine to DMEDA or DEEDA as diamine monomer gave similar to slightly higher adhesive strengths. It is believed that this is related to the flexibility of DMEDA and DEEDA monomers when compared to the cyclic piperazine.

The adhesive strength of the liquid adhesives is significantly higher than the adhesive strength of the same adhesive composition used as a hot-melt. In some cases the values even double (e.g. for BADGE₁₀₇₅PP_{1.2}). This can be explained by a better wetting of the stainless steel substrates with the liquid adhesive.

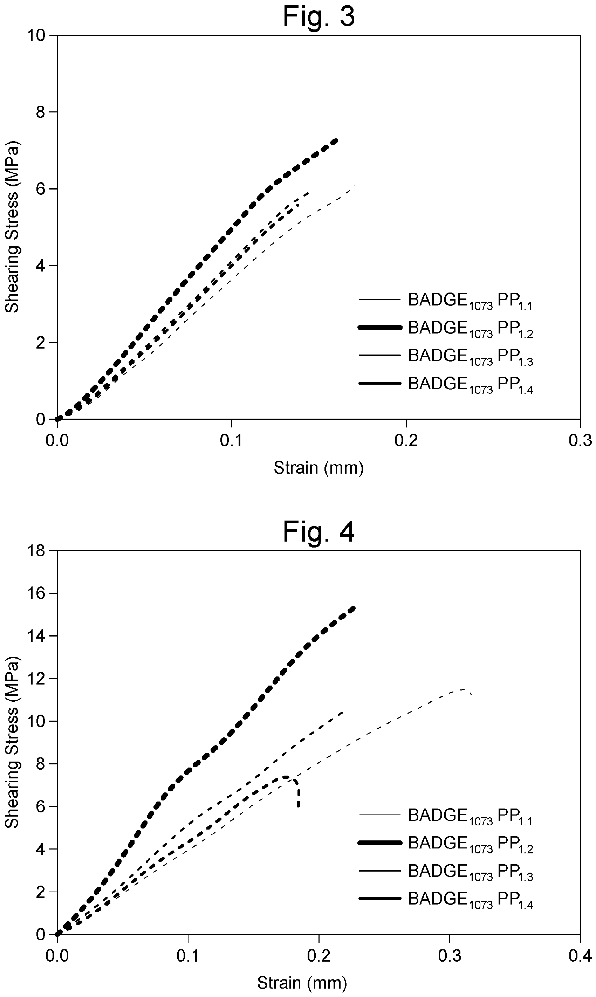

After failure upon adhesive testing, the lap joints were thermally re-bonded by placing the two stainless steel substrates back on the hot plate at 120 °C, without applying additional adhesive or adhesive solution (for the liquid adhesive compositions). When the adhesive had formed a viscous liquid, the two substrates were joined as explained above and second shear test was carried out. Figs. 3 and 4 shows the shear-stress vs. strain curves of the four inventive adhesives of Figs. 1 and 2, but for the second test (so after re-bonding). Very similar values were measured, indicating that re-bonding can be done easily without loss of adhesive strength.

Fast thermal de-bonding on demand was also demonstrated by mounting weights up to 40 kg using the stainless steel lap joint made with BADGE₁₀₇₅PP_{1.2} (made with DMF) dissolved in BG as liquid adhesive. Upon heating the joint to a temperature above its 90 °C, i.e. above its T_{g}, de-bonding was achieved within seconds.

Films having a thickness of 200 µm were prepared in the same way as for the 100 µm thick films, but by dissolving 200 mg of the adhesive composition in 2 mL CHCl₃, using the inventive BADGE-PP adhesive compositions.

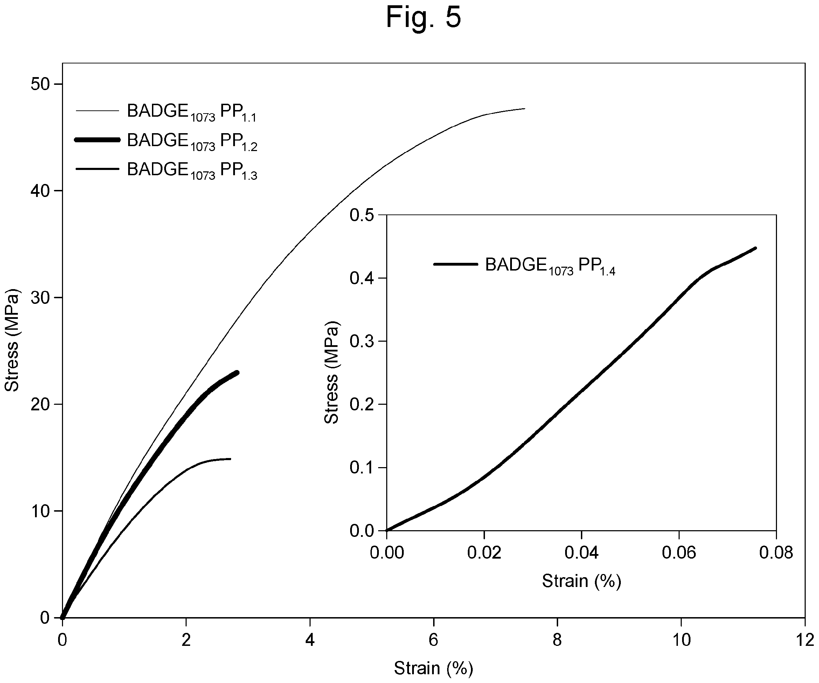

The films were subjected to tensile testing according to ASTM D882, at ambient conditions (25 °C) on a static material testing machine from Zwick/Roell equipped with a 200 N Xforce HP load cell. Rectangular-shaped samples (width: 5.2 mm) were measured at a strain rate of 150% min⁻¹. Reported data are averages of five to eight independent measurements, and all errors are standard deviations. Fig. 5 shows the resulting stress vs. strain curves, from which it is noticed that the tensile strength (σ) and failure strain (ε) depends largely on the Mₙ. While BADGE₁₀₇₅PP_{1.4} is very brittle and fails at σ = 0.5 ± 0.01 MPa and ε < 0.1%, BADGE₁₀₇₅PP_{1.1}, which has the highest Mₙ among the processible materials, is a strong and tough material, with σ = 48 ± 3 MPa and ε = 7.4 ± 0.2%. The values of BADGE₁₀₇₅PP_{1.2} (σ = 23 ± 1 MPa, ε = 2.8 ± 0.1%) and BADGE₁₀₇₅PP_{1.3} (σ = 13 ± 1 MPa, ε = 2.7 ± 0.1%) are between these limits, and scale with the Mₙ.

The 200 µm thick films were also analysed by dynamic mechanical analysis (DMA) on a TA Instruments DMA Q800 instrument at a heating rate of 3 °C min⁻¹, a frequency of 1 Hz, and an amplitude of 15 µm in the range of 25 °C to 200 °C. Tensile clamps and rectangular-shaped samples (width: 5.2 mm, length: 10.0 mm). Reported data are averages of five to eight independent measurements, and all errors are standard deviations.

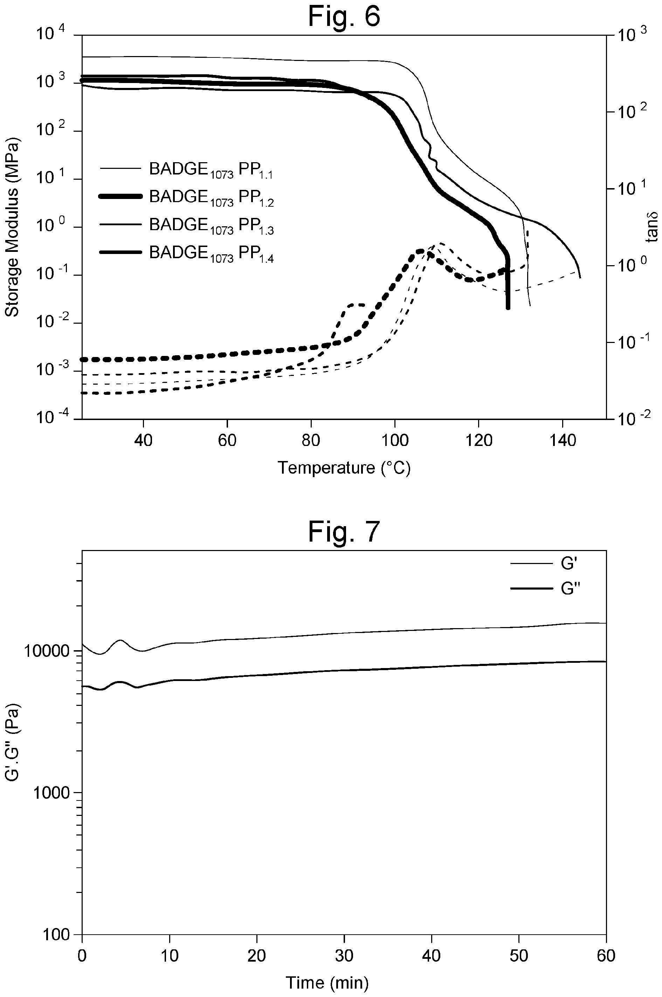

Fig. 6 shows the DMA traces, which confirm the thermoplastic behaviour that was noticed during DSC, and the stress-strain data of the tensile testing of Fig. 5. All adhesive compositions display a glassy regime that extends to ca. 90-110°C, in which the storage modulus *E*' is relatively constant. At 25°C BADGE₁₀₇₅PP_{1.1} displays by far the highest E' (3.5 ± 0.2 GPa), which is associated with the high Mₙ of this material. BADGE₁₀₇₅PP_{1.2}, BADGE₁₀₇₅PP_{1.3}, and BADGE₁₀₇₅PP_{1.4} exhibit a lower stiffness, with E' values that range from 0.9 ± 0.2 to 1.2 ± 0.2 GPa. Above 90-110°C, E' starts to decline sharply, signalling the onset of T_{g} (100°C - 120°C). BADGE₁₀₇₅PP_{1.4}, which possesses a lower Mₙ, fails at the T_{g}.

200 µm thick films of BADGE₁₀₇₅PP_{1.2}, BADGE₁₀₇₅PP_{1.3}, and BADGE₁₀₇₅PP_{1.4} were also subjected to isothermal rheological experiments, performed on an Anton Paar MCR 702 rheometer equipped with a CTD600 convection temperature device. A plate-plate geometry with a diameter of 8 mm was used. The films were loaded into the instrument, and the measurement temperature was set to 120 °C. Once the temperature had been reached, the gap was set to 0.1 mm and the measurement was initiated, while maintaining a constant temperature for 60 minutes. The storage and loss modulus (*G*' and *G*" respectively) were monitored as a function of time.

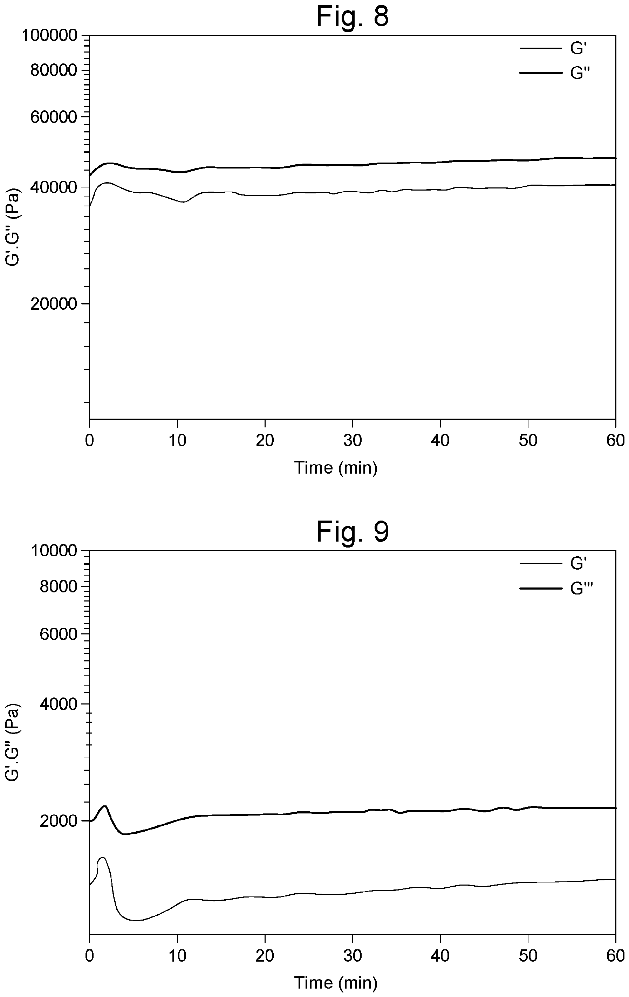

Figs. 7, 8 and 9 show the storage and loss modulus for BADGE₁₀₇₅PP_{1.2}, BADGE₁₀₇₅PP_{1.3}, and BADGE₁₀₇₅PP_{1.4}, respectively. The data show that, as expected, the melt viscosity increases with Mₙ and decreases with temperature. More importantly, only minor changes in G' and G" as the materials are heated, indicating that the viscoelastic properties remain constant under the test conditions. Notably, no cross-over point between G' and G" is observed in any of the materials, indicating that crosslinking reactions are absent.

## Claims

1. A thermoplastic adhesive composition comprising a linear oligomer and/or a linear polymer obtained by co-oligomerisation and/or copolymerisation of a mixture comprising at least one monomer comprising two end-standing glycidyl groups and at least one monomer comprising two secondary amine groups or one primary amine group, **characterized in that** the ratio of the number of end-standing glycidyl groups to the number of amine groups in the mixture is between 1:1.1 and 1:2.75, preferably between 1:1.1 and 1:2, more preferably between 1:1.1 and 1:1.5, most preferably between 1:1.1 and 1:1.4.

2. The thermoplastic adhesive composition according to claim 1, wherein the mixture further comprises a monofunctional secondary amine compound.

3. The thermoplastic adhesive composition according to any one of the preceding claims, wherein the mixture comprises a monomer comprising two secondary amine groups, and wherein the monomer comprising two secondary amine groups is piperazine or a compound according to formula (I)
R¹-NH-R²-NH-R³ (I),
wherein
R¹ and R³, individually, are C₁₋₂₀ alkyl, preferably C₁₋₁₀ alkyl, more preferably C₁₋₂ alkyl; and
R² is C₁₋₂₀ alkylene, preferably C₁₋₁₀ alkylene, more preferably C₁₋₂ alkylene, xylyl, or hydrogenated xylyl.

4. The thermoplastic adhesive composition according to any one of the previous claims, wherein the monomer comprising two end-standing glycidyl groups is a bisphenol A diglycidyl ether (BADGE) according to formula (II) 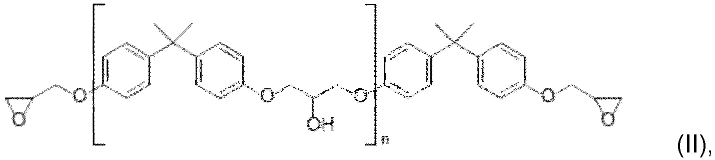 wherein n is between 0 and 10, preferably between 0 and 5, more preferably between 2 and 3.

5. The thermoplastic adhesive composition according to any one of the preceding claims, wherein the number-average molecular weight, Mₙ, of said linear oligomer and/or linear polymer is between 5000 and 30000 g/mol, preferably between 7500 and 25000 g/mol, as determined based on calibrations with poly(methyl methacrylate) standards of data measured by Size Exclusion Chromatography (SEC) using N,N-dimethylformamide as eluent.

6. The thermoplastic adhesive composition according to any one of the preceding claims, wherein said linear oligomer and/or linear polymer has a glass transition temperature (T_{g}) between 50 and 150 °C, preferably between 70 and 120 °C, as measured by Differential Scanning Calorimetry (DSC) using two heating/cooling cycles with heating/cooling rates of 10 °C/min, wherein the T_{g} values are reported for the second heating cycle.

7. A liquid adhesive composition comprising a thermoplastic adhesive composition according to any one of the preceding claims and an organic solvent, wherein the linear oligomer and/or linear polymer of the thermoplastic adhesive composition is (are) at least partially dissolved in the organic solvent, preferably wherein the solvent is selected from the list consisting of *N*,*N*-dimethylformamide, dimethyl sulfoxide, tetrahydrofuran, trichloromethane, and butyl glycol.

8. A method of producing a thermoplastic adhesive composition comprising a linear oligomer and/or a linear polymer, comprising reacting a mixture comprising at least one monomer comprising two end-standing glycidyl groups and at least one monomer comprising two secondary amine groups or one primary amine group, **characterized in that** the ratio of the number of end-standing glycidyl groups to the number of amine groups in the mixture is between 1:1.1 and 1:2.75, preferably between 1:1.1 and 1:2, and most preferably between 1:1.1 and 1:1.4

9. The method according to claim 8, wherein the mixture is reacted in the presence of a solvent at a temperature between 50 °C and 120 °C, preferably between 70 °C and 90 °C, in an inert atmosphere.

10. The method according to claim 8 or claim 9, wherein the mixture further comprises a monofunctional secondary amine compound.

11. The method according to any one of claims 8 to 10, wherein the mixture comprises a monomer comprising two secondary amine groups, and wherein the monomer comprising two secondary amine groups is piperazine or a compound according to formula (I).

12. The method according to any one of claims 8 to 10, wherein the monomer comprising two end-standing glycidyl groups is a bisphenol A diglycidyl ether (BADGE) according to formula (II).

13. The method according to any one of claims 8 to 12, wherein the solvent is *N*,*N*-dimethylformamide or butyl glycol.

14. A method of applying the thermoplastic adhesive composition of any one of claims 1 to 6 or the liquid adhesive composition of claim 7 to a substrate, comprising:
- for the thermoplastic adhesive composition of any one of claims 1 to 6, at least partially dissolving the thermoplastic adhesive composition in an organic solvent, preferably wherein the solvent is selected from the group consisting of N,N-dimethylformamide, dimethyl sulfoxide, tetrahydrofuran, trichloromethane and butyl glycol, thereby obtaining a liquid adhesive composition according to claim 7;
- applying the liquid adhesive composition to the substrate; and
- removing the organic solvent, thereby solidifying the liquid adhesive composition.

15. A method of removing an adhesive comprising the thermoplastic adhesive composition of any one of claims 1 to 6 or the liquid adhesive composition of claim 7 from a substrate, comprising:
- contacting the substrate with an organic solvent, thereby at least partially dissolving the adhesive and obtaining the liquid adhesive composition of claim 7, preferably wherein the organic solvent is selected from the group consisting of *N*,*N*-dimethylformamide, dimethyl sulfoxide, tetrahydrofuran, trichloromethane and butyl glycol; and
- for the thermoplastic adhesive composition of any one of claims 1 to 6, removing the organic solvent from the liquid adhesive composition of claim 7.

16. Use of the thermoplastic adhesive composition of any one of claims 1 to 6 or the liquid adhesive composition of claim 7 as an adjustable permanent adhesive or as a temporary adhesive, preferably for watch components.
